# FASCICULE DE BREVET EUROPEEN

(11) **EP 2 715 268 B1**
(45) Date de publication et mention de la délivrance du brevet: **09.09.2015**
(21) Numéro de dépôt: 12723173.6
(22) Date de dépôt: 22.05.2012
(51) Int. Cl.: F28F 9/02

(54) **BOITE COLLECTRICE, ECHANGEUR DE CHALEUR COMPRENANT LADITE BOITE COLLECTRICE ET PROCEDE DE SERTISSAGE D'UNE TELLE BOITE**
SAMMELKASTEN, WÄRMETAUSCHER MIT DIESEM SAMMELKASTEN UND VERFAHREN ZUM BÖRDELN EINES DERARTIGEN KASTENS
HEADER BOX, HEAT EXCHANGER COMPRISING SAID HEADER BOX AND METHOD OF CRIMPING SUCH A BOX

(30) Priorité: 26.05.2011 FR 1154576
(43) Date de publication de la demande: 09.04.2014
(73) Titulaire: Valeo Systemes Thermiques, 78320 Le Mesnil Saint Denis (FR)
(72) Inventeur: DUMOUTIER, Mickaël, F-51490 Betheniville (FR); MOREAU, Laurent, F-51100 Reims (FR)
(74) Mandataire: Metz, Gaëlle
(86) Numéro de dépôt international: PCT/EP2012/059465
(87) Numéro de publication internationale: WO 2012/160054

(56) Documents cités:
- WO-A1-2011/048050
- DE-A1- 4 232 018

## Description

L'invention concerne une boite collectrice comprenant un collecteur, un couvercle et au moins une bride, un échangeur de chaleur comprenant ladite boite collectrice et un procédé de sertissage d'une telle boite.

L'invention s'applique à tout type d'échangeurs de chaleur, notamment pour véhicule automobile, comme par exemple des échangeurs thermiques de boucles de climatisation.

Dans ce domaine, il est connu des échangeurs comprenant un faisceau de tubes disposés parallèlement les uns aux autres sur une ou plusieurs rangées parallèles entre elles, ces tubes étant agencés pour transporter un fluide frigorigène, tandis que de l'air s'écoule entre les tubes et échange de la chaleur avec le fluide frigorigène.

Les tubes sont reliés à des boites collectrices à travers des orifices de passage : une boite collectrice d'entrée et une boite collectrice de sortie. Le fluide frigorigène s'écoule dans les tubes depuis la boite collectrice d'entrée vers la boite collectrice de sortie.

Les boites collectrices comprennent un collecteur à paroi ouverte longitudinalement et un couvercle fermant le collecteur, après brasage. Pour pré-assembler le couvercle et le collecteur avant brasage, il est connu de les sertir. Pour cela, les collecteurs possèdent des ailes latérales dont une partie est sertie autour du couvercle pour fermer la boite collectrice.

A ces boites collectrices sont rapportées des brides de raccordement de fluide, d'entrée sur la boite collectrice d'entrée et de sortie sur la boite collectrice de sortie. Elles permettent au fluide d'entrer et de sortir de l'échangeur.

D'autres brides peuvent également être rapportées sur les boites collectrices comme par exemple des brides destinées à la fixation de l'échangeur sur des supports appropriés du véhicule et/ou destinées à l'accrochage d'une bouteille de stockage de fluide en communication de fluide avec l'un des collecteurs.

Lors du pré-assemblage du collecteur et du couvercle, une partie des brides est également sertie entre la partie du collecteur et le couvercle. Le document WO2011/048050-A1 divulgue un échangeur de chaleur pourvu d'une boite collectrice ainsi pré-assemblée.

Il est connu d'utiliser deux types de poinçons différents pour effectuer l'opération de sertissage. La partie de bride sertie ayant une épaisseur non nul, le premier poinçon servant à sertir la partie du collecteur sur la partie de bride sertie sur le couvercle possède un angle ouvert. Le deuxième poinçon possède en revanche un angle plus fermé, permettant de replier d'avantage le reste du collecteur et de le sertir ainsi sur le couvercle de sorte que l'ensemble soit correctement bloqué avant le brasage.

Un inconvénient de cette méthode est l'utilisation de deux poinçons différents pour effectuer une même opération de sertissage. Il faut en effet positionner les poinçons en fonction du nombre et de la position des brides présentes sur la boite collectrice. Il est donc nécessaire d'effectuer régulièrement des opérations de changements de poinçons, en fonction du modèle d'échangeur mis en production, ce qui engendre des pertes de temps et donc de productivité.

L'invention a pour but de surmonter le problème précité.

Elle propose à cet effet une boite collectrice comprenant un collecteur et un couvercle présentant une dimension d'extension longitudinale et au moins une bride sertie entre le collecteur et le couvercle.

Selon l'invention :
- le collecteur possède une ductilité différente de celle de la bride ;
- au niveau de ladite bride, une portion longitudinale du collecteur et/ou de la bride est laminée de sorte que la bride soit bloquée entre le collecteur et le couvercle.

L'invention consiste ainsi à concevoir une boite collectrice dans laquelle une portion longitudinale du collecteur et/ou de la bride est laminée, c'est-à-dire que le collecteur et/ou la bride sont localement déformés, notamment aplatis et/ou écrasés. Selon l'invention, on rattrape donc partiellement la surépaisseur de matière due à la bride lors de son sertissage ce qui va faciliter le sertissage simultané du reste du collecteur et du couvercle.

Ainsi, grâce à l'invention, il est possible d'utiliser un même profil de poinçon pour sertir le collecteur sur la ou les brides et sur le couvercle puisque l'épaisseur réduite de la portion longitudinale du collecteur et/ou de la bride facilitera un blocage du collecteur et du couvercle également là où il n'y a pas de bride.

Selon un aspect de l'invention, le collecteur présente ladite portion longitudinale laminée, bloquant la bride, et une portion longitudinale définissant le reste de la longueur du collecteur, dite portion longitudinale restante, et le couvercle est bloqué par la portion longitudinale restante du collecteur. Selon cet aspect de l'invention, c'est le collecteur qui présente la ductilité la plus élevé et ladite portion longitudinale laminée a une épaisseur plus faible que le reste du collecteur qui n'est pas laminé.

Selon un aspect de l'invention, la portion longitudinale du collecteur bloquant la bride et la portion longitudinale restante du collecteur présente une même inclinaison, au moins au niveau d'une face opposée à une face située en vis-à-vis du couvercle et/ou de la bride. Cette inclinaison permet à la fois au collecteur de bloquer la bride et, aux endroits dépourvus de brides, de bloquer le couvercle en profitant du fait que ladite portion longitudinale bloquant la bride est laminée.

Selon un exemple de réalisation, la portion longitudinale du collecteur bloquant la bride est laminée vers la bride, en particulier vers une partie de la bride formant un corps présentant la partie fonctionnelle de la bride (accrochage et/ou circulation de fluide).

Avantageusement, la bride présente une partie de pied contre laquelle le collecteur est laminé par exemple raccordée au corps. Cette partie de pied s'étend par exemple sur une distance inférieure à 40 mm, et notamment sur une distance égale à 20 mm, suivant ladite dimension d'extension longitudinale.

Selon un aspect de l'invention, le collecteur présente des ailes latérales laminées contre la partie de pied de la bride.

Selon un mode de réalisation, les ailes latérales présentent un bord longitudinal libre ayant une épaisseur initiale plus faible que le reste des ailes latérales du collecteur.

L'invention concerne aussi un échangeur de chaleur muni d'une boite collectrice telle que définie précédemment.

L'invention concerne également un procédé de sertissage d'une boite collectrice comprenant un collecteur et un couvercle présentant une dimension d'extension longitudinale et au moins une bride.

Selon ce procédé, on sertit la bride entre le collecteur et le couvercle, et on sertit le collecteur sur le couvercle, en utilisant un même profil de poinçon, de sorte qu'en une seule opération, la bride soit bloquée entre le collecteur et le couvercle et le couvercle soit bloqué par le collecteur, par laminage d'une partie longitudinale du collecteur et/ou de la bride

Grâce à l'invention, on utilise un même profil de poinçon pour le sertissage du collecteur, des brides et du couvercle en évitant ainsi les changements de profils de poinçon en fonction du modèle de boite collectrice à sertir et on améliore donc la productivité d'une telle opération de sertissage.

Selon une variante de l'invention, la ductilité du collecteur étant supérieure à celle de la bride, on lamine ledit collecteur.
Les figures annexées feront bien comprendre comment l'invention peut être réalisée. Sur ces figures, des références identiques désignent des éléments semblables.
La figure 1 est une vue schématique en plan d'un exemple de réalisation d'un échangeur de chaleur comprenant une boite collectrice conforme à l'invention.
La figure 2 est une coupe transversale de la boite collectrice après sertissage du collecteur sur la bride, selon la ligne II-II de la figure 1.
La figure 3 est une vue similaire à la figure 2, représentant la boite collectrice après sertissage du collecteur sur le couvercle à un endroit dépourvu de bride, selon la ligne III-III de la figure 1.
La figure 4 est une vue similaire à la figure 2, dans laquelle le collecteur serti sur le couvercle, aux endroits dépourvu de bride, est également représenté, en pointillés.
La figure 5 est une vue schématique en perspective d'une boite collectrice comprenant un collecteur, un couvercle et une bride conformément à l'invention.
La figure 6 est une vue similaire à la figure 4, représentant une variante de réalisation.
Les figures 7a et 7b sont des vues similaires à la figure 2, représentant la boite collectrice, positionnée sur une matrice, avant sertissage (figure 7a) et après sertissage (figure 7b) du collecteur sur la bride conformément à l'invention.

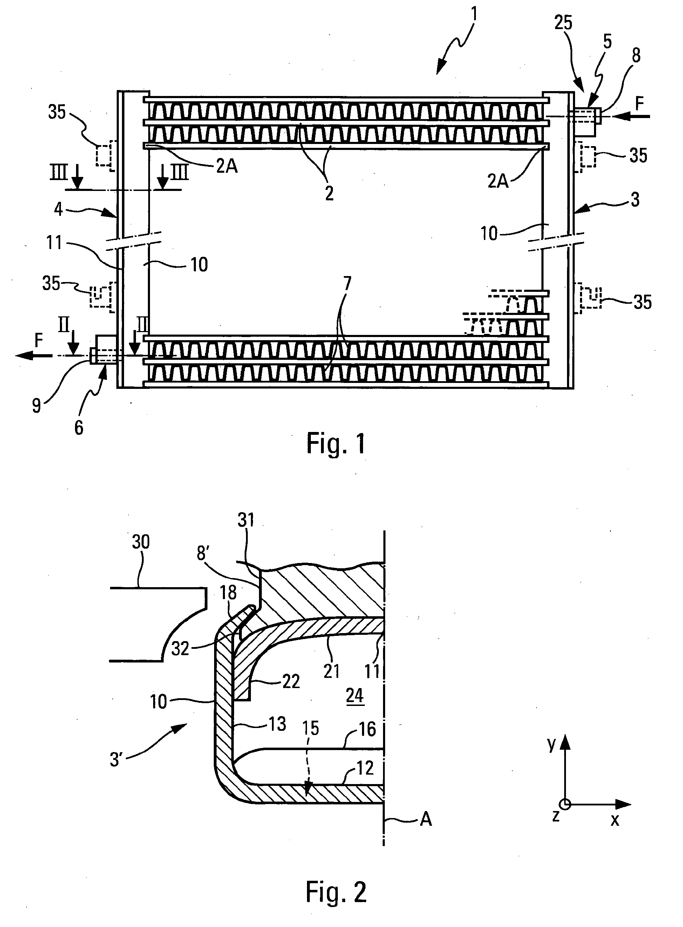

L'invention trouve son application, par exemple, dans un échangeur de chaleur tel que représenté sur la figure 1. Cet échangeur est, notamment, un condenseur d'une boucle de climatisation de l'habitacle d'un véhicule.

L'échangeur de chaleur 1 peut comprendre un faisceau de tubes parallèles 2 dont les extrémités 2A sont reliées, de manière fixe et étanche, à des boites collectrices respectivement d'entrée 3 et de sortie 4 selon le sens de circulation F d'un fluide frigorigène circulant dans les tubes 2. Ces boites collectrices d'entrée 3 et de sortie 4 comprennent des brides d'entrée 5 et de sortie 6, elles mêmes connectées à des raccords d'entrée 8 et de sortie 9, montés sur des tubulures et permettant au fluide d'effectuer une boucle de circulation.

En particulier, les tubes 2 dans lesquels circule le fluide ont une section transversale aplatie et entre ceux-ci sont agencés des intercalaires 7 augmentant la surface d'échange thermique entre le fluide circulant dans l'échangeur 1 et le flux d'air extérieur traversant celui-ci. L'intérieur des tubes 2 peut aussi inclure des perturbateurs qui, à l'instar des intercalaires 7, augmentent la surface d'échange thermique et la tenue mécanique des tubes. Il pourra aussi s'agir de tubes extrudés. Chaque tube définit, par exemple, une pluralité de canaux internes, parallèles, de circulation de fluide.

Les boites collectrices 3, 4 peuvent comprendre d'autres brides 35 destinées à la fixation de l'échangeur 1 sur des supports appropriés du véhicule et/ou à l'accrochage d'une bouteille de stockage de fluide en communication de fluide avec l'une des boites collectrices.

Les différents éléments évoqués précédemment que comprend l'échangeur de chaleur 1 sont, notamment, brasés les uns aux autres.

Une boite collectrice conforme à l'invention, est représenté plus en détail à la figure 2. Il pourrait s'agir indifféremment d'une boite collectrice d'entrée 3 et/ou de sortie 4 puisqu'elles sont globalement identiques et dans la suite de la description nous l'appellerons boite collectrice 3'. Par convention et pour simplifier la description de la boite collectrice 3' selon l'invention, on forme un repère cartésien (o, x, y, z) et on définit la direction o-x comme étant la direction de la largeur de la boite collectrice 3', o-y la direction de la hauteur, et o-z la direction de la longueur.

Il faut noter que les figures 2 à 4, 6, 7a et 7b représente une boite collectrice 3' coupée selon un axe de symétrie A parallèle à la direction o-y. La suite de la description concernant ces figures se fera donc sur une première partie de la boite collectrice 3', la partie symétrique situé de l'autre coté de l'axe de symétrie A étant identique. Sur ces figures, les tubes 2 représentés sur la figure 1 n'ont pas été illustrés dans un objectif de simplification des figures.

Dans l'exemple illustré à la figure 2, la boite collectrice 3', conforme à l'invention, a une forme générale tubulaire. Elle est, par exemple, de type « bipartite », c'est-à-dire qu'elle comprend un collecteur 10 et un couvercle 11 constitués de deux pièces distincts. Elle comprend en outre, comme décrit précédemment, au moins une bride. Il pourrait s'agir indifféremment d'une bride d'entrée 8, de sortie 9 et/ou d'une autre bride 35 et dans la suite de la description nous appellerons la bride représenté sur les figures 2 à 7b, bride 8'. Une seule bride 8' est représentée sur la figure 2 mais la boite collectrice 3' pourraient comprendre plusieurs bride 8', chacune d'entre elles serties entre le collecteur 10 et le couvercle 11. Ainsi, l'opération de sertissage pourra permettre de pré-assembler non seulement le collecteur 10 et le couvercle 11, mais aussi la ou les brides 8'.

Le collecteur 10 possède, par exemple, une section transversale sensiblement en U et une paroi définissant un fond 12 prolongé de deux branches ou ailes latérales 13, parallèles, dont l'extrémité distale délimitent une ouverture longitudinale obturée par le couvercle 11. Dans le fond 12 du collecteur 10 sont ménagées des fentes aplaties 15 tout du long de celui-ci, dans lesquelles sont reçues les extrémités correspondantes des tubes parallèles 2. Elles pourront être bordées de collets 16.

Le couvercle 11 présente, par exemple, lui aussi, une section transversale en U dont une paroi forme une base 21, notamment légèrement concave, prolongée par des branches latérales 22, parallèles, plus courtes que celles du collecteur 10. La dimension, notamment en largeur du couvercle, est telle que les branches latérales 22 s'ajustent tête-bêche entre les ailes latérales 13 du collecteur 10.

La boite collectrice 3' présente une dimension d'extension longitudinale, c'est-à-dire qu'elle s'étend en longueur suivant la direction o-z. Ainsi, le collecteur 10, le couvercle 11 et la bride 8' présentent également une dimension d'extension longitudinale.

L'assemblage du couvercle 11 et du collecteur 10 définit un espace interne 24 dans lequel est amené à circuler le fluide de la boucle. De par la forme emboîtée des U du collecteur 10 et du couvercle 11, la section transversale de la boite collectrice 3' est approximativement rectangulaire, mais pourrait être différente.

Des cloisons, non représentées, sont éventuellement prévues à chacune des extrémités longitudinales de la boite collectrice 3' pour la fermer. Des cloisons intermédiaires, pouvant rendre deux parties de la boite collectrice 3' hermétiques l'une de l'autre peuvent également être prévues. Ces cloisons comprennent par exemple, une butée pour le positionnement du couvercle 11.

Selon l'invention, le collecteur 10 possède une ductilité différente de celle de la bride 8' et au niveau de ladite bride 8', une portion longitudinale 18 du collecteur 10 est laminée de sorte que la bride 8' soit bloquée entre le collecteur 10 et le couvercle 11.

Dans l'exemple illustré, la ductilité du collecteur 10 est plus importante que celle de la bride 8' et c'est donc une portion longitudinale 18 du collecteur 10 qui est laminée, mais une portion longitudinale de la bride 8' pourrait également être laminée conformément à l'invention.

La portion longitudinale 18 du collecteur 10 bloquant la bride 8' et qui est laminée sur celle-ci se situe au niveau de l'extrémité distale des ailes latérales 13 et s'étend longitudinalement, c'est-à-dire dans la direction o-z, le long de la bride 8'.

La portion longitudinale 18 bloquant la bride 8' est inclinée par rapport au reste de l'aile latérale 13 à laquelle elle appartient, c'est-à-dire qu'elle présente un angle d'inclinaison par rapport à la direction o-y selon laquelle s'étendent les ailes latérales 13. C'est l'opération de sertissage qui lui donne cette inclinaison, qui la lamine et qui lui permet d'être en contact avec la bride 8' afin d'épouser une partie de la surface de la bride 8' de manière à la bloquer entre le collecteur 10 et le couvercle 11.

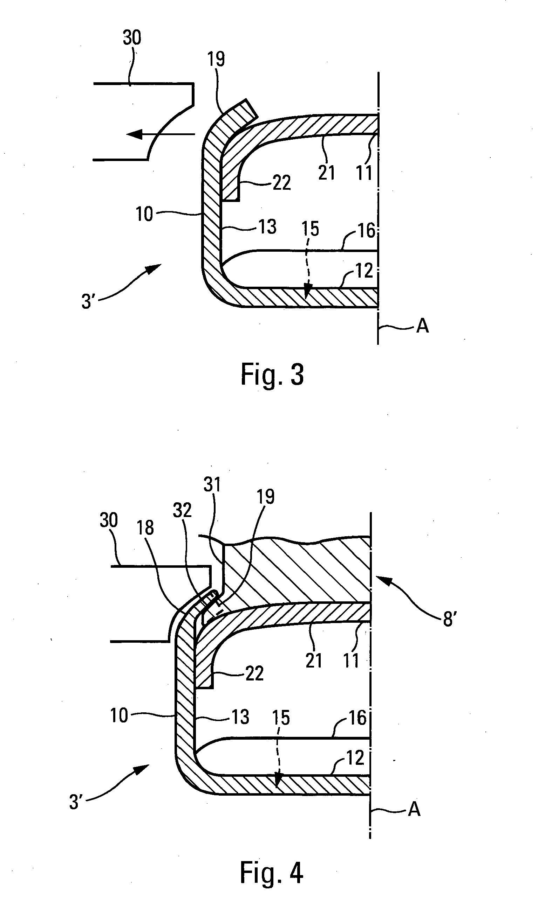

La figure 3 est une vue en coupe dans un plan parallèle au plan de la figure 2 de la même boite collectrice 3' mais à un endroit dépourvu de bride 8' sertie entre le collecteur 10 et le couvercle 11.

Le collecteur 10 est ainsi représenté au niveau d'une portion longitudinale définissant le reste de la longueur du collecteur 10, dite portion longitudinale restante 19, c'est-à-dire la portion longitudinale sur laquelle il n'y a pas de bride 8' sertie. Tout comme la portion longitudinale 18 bloquant la bride 8', la portion longitudinale restante 19 se situe au niveau de l'extrémité distale des ailes latérales 13 du collecteur 10.

La portion longitudinale restante 19 est également inclinée par rapport au reste de l'aile latérale 13 à laquelle elle appartient, c'est-à-dire qu'elle présente un angle d'inclinaison par rapport à la direction o-y selon laquelle s'étendent les ailes latérales 13. C'est l'opération de sertissage qui lui donne cette inclinaison et qui lui permet d'être en contact avec le couvercle 11 afin d'épouser une partie de la surface du couvercle 11 de manière à le bloquer.

Que ce soit pour la portion longitudinale 18 bloquant la bride 8' ou la portion longitudinale restante 19, l'opération de sertissage est une opération de pré assemblage avant brasage des éléments que comprend la boite collectrice 3'.

La figure 4 permet d'illustrer la portion longitudinale 18 bloquant la bride 8' et la portion longitudinale restante 19 de manière superposées. Comme déjà dit, la portion longitudinale 18 du collecteur 10 bloquant la bride 8' est laminée et présente une épaisseur inférieure et une longueur supérieure à la portion longitudinale restante 19 du collecteur 10. Par contre elles possèdent une inclinaison identiques entre elles au moins au niveau de la face opposée du couvercle. On remarque en outre sur cette figure que la portion longitudinale 18 du collecteur 10 est laminée vers la bride 8', sans l'atteindre.

Comme on l'a vu aux figures 2 et 3, cette même inclinaison est suffisante pour permettre d'une part à la portion longitudinale 18 du collecteur 10 bloquant la bride 8' de bloquer la bride 8' et d'autre part à la portion restante du collecteur 10 de bloquer le couvercle 11. Il est ainsi possible d'utiliser un seul et même profil d'outil, par exemple un poinçon 30, pour effectuer l'opération de sertissage, afin de procurer une seule et même inclinaison au collecteur 10 suivant toute sa longueur.

La bride 8' comprend un corps centrale 31, de forme tubulaire et une paroi d'extrémité périphérique, situé à une extrémité de la bride 8' légèrement courbé de manière à épouser la forme de la base 21 et du début des ailes latérales 22 du couvercle 11. Ladite paroi d'extrémité périphérique de la bride 8' présente deux parties en saillit par rapport au corps centrale 31 de la bride 8', situées à l'opposées l'une de l'autre et appelées parties de pieds 32. Une seule partie de pied 32 est illustré aux figures 2, 4, 6, 7a et 7b et c'est au moins contre cette partie de pied 32 que le collecteur est laminé. C'est en particulier une portion des ailes latérales 13 qui est laminée contre la partie de pied 32.

Cette partie de pied 32 s'étend, par exemple, sur une distance inférieure à 40 mm, notamment 20 mm, suivant la dimension d'extension longitudinale, c'est-à-dire suivant la direction o-z.

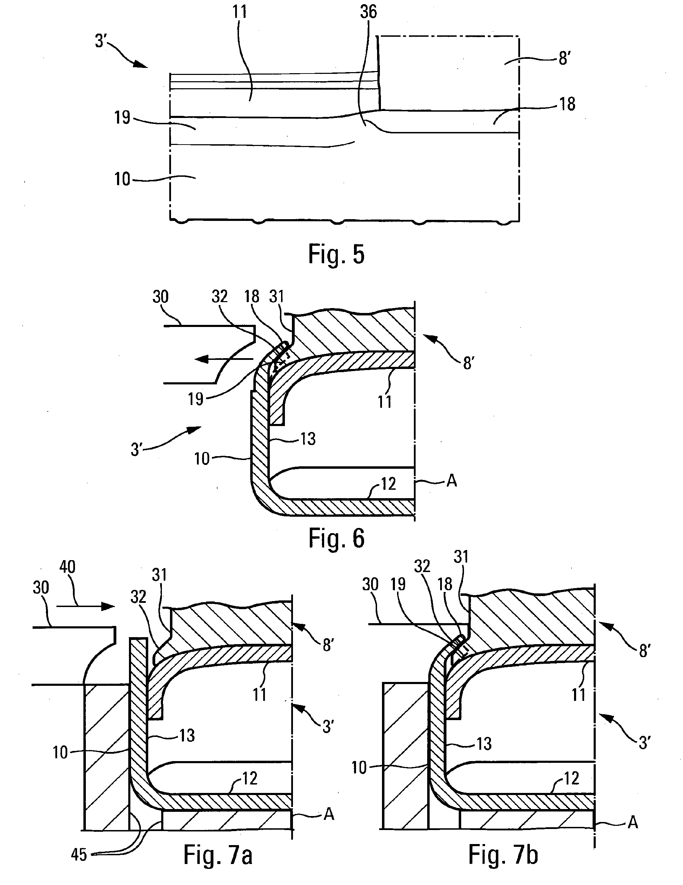

La figure 5 est une vue en perspective de la boite collectrice 3' selon l'invention. Elle permet d'illustrer l'extension longitudinale de la portion longitudinale 18 bloquant la bride 8' et celle de la portion longitudinale restante 19.

Cette figure permet également de représenter une zone de raccord 36, légèrement laminées et faisant la jonction entre la portion longitudinale 18 bloquant la bride 8' et la portion longitudinale restante 19.

La figure 6 permet d'illustrer une variante de l'invention selon laquelle les ailes latérales 13 présentent une épaisseur initiale plus faible que le reste des ailes latérales 13. Autrement dit, les ailes latérales 13 présentent une partie située au niveau de leurs extrémités distales de plus faible épaisseur par rapport à une zone des ailes latérales 13 située plus proche du fond 12 du collecteur 10.

Dans cette variante de l'invention, ce sont ces parties de plus faibles épaisseurs qui sont serties et laminées au niveau de la bride 8' pour la bloquer contre le couvercle 11. Ce sont également ces parties de plus faibles épaisseurs qui sont serties afin de bloquer le couvercle aux endroits dépourvus de bride 8'.

Les boites collectrices selon l'invention trouvent une application particulière sur des échangeurs de chaleur tel que des condenseurs ou des évaporateurs de circuit de climatisation qui présente, par exemple, la structure évoqué précédemment. Il peuvent également s'appliquer dans tous types d'échangeurs de chaleur pour véhicules automobiles comme par exemple, des radiateurs de refroidissement du moteur, des radiateurs de chauffage de l'habitacle, des refroidisseurs de gaz d'échappement ou des refroidisseurs d'air de suralimentation.

Comme illustré aux figure 7a et 7b, l'invention concerne également un procédé de sertissage d'une boite collectrice 3' telle que définie précédemment, comprenant un collecteur 10 et un couvercle 11 présentant une dimension d'extension longitudinale et au moins une bride 8'.

Le procédé comprend une étape, représenté sur la figure 7a par la flèche référencée 40, selon laquelle on sertit la bride 8' entre le collecteur 10 et le couvercle 11, et on sertit le collecteur 10 sur le couvercle 11, en utilisant un même profil de poinçon 30, de sorte que, comme représenté sur la figure 7b, la bride 8' soit bloquée entre le collecteur 10 et le couvercle 11 et que le couvercle 11 soit bloqué par le collecteur 10 en une seule opération et avec un seul et même type de poinçon 30, par laminage d'une partie longitudinale du collecteur 10 et/ou de la bride 8'.

Pour réaliser le procédé, la boite collectrice 3' est préalablement placée dans une matrice 45. Le collecteur 10 se trouve en contact avec la matrice 45 au niveau des parois extérieures de ses ailes latérales 13 et de son fond 12. Ainsi lorsque l'on sertit le collecteur 10 sur le couvercle 11 et sur la bride 8', la boite collectrice sera maintenu en position à l'intérieur de la matrice 45.

L'utilisation du même profil du poinçon donne une même inclinaison à la portion longitudinale 18 du collecteur 10 bloquant la bride 8' et à la portion longitudinale restante 19 du collecteur 10, cette inclinaison étant suffisante pour bloquer la bride 8' et le couvercle 11 et est obtenue à la suite d'une seule opération de sertissage.

Il n'est donc plus nécessaire d'utiliser plusieurs profils de poinçon ni de les changer de position en fonction de la présence et du positionnement d'une bride sur la boite collectrice. Il est alors possible de sertir avec le même profil de poinçon plusieurs modèles différents de boite collectrice.

Dans les exemples illustrés aux figures 2 à 7b, et comme on l'a vu précédemment, la ductilité du collecteur 10 est supérieure à celle de la bride 8'. Ainsi, lors de l'opération de sertissage, on lamine le collecteur 10. On le lamine, par exemple, vers la bride 8', et en particulier vers le corps central 31. Avantageusement mais non exclusivement, on lamine le collecteur 10 vers la bride 8', sans l'atteindre.

## Revendications

1. Boite collectrice (3') comprenant un collecteur (10) et un couvercle (11) présentant une dimension d'extension longitudinale et au moins une bride (8') sertie entre le collecteur (10) et le couvercle (11), **caractérisé par le fait que** :
- le collecteur (10) possède une ductilité différente de celle de la bride (8') ;
- au niveau de ladite bride (8'), une portion longitudinale (18) du collecteur (10) et/ou de la bride (8') est laminée de sorte que la bride (8') soit bloquée entre le collecteur (10) et le couvercle (11).

2. Boite collectrice (3') selon la revendication 1, dans laquelle le collecteur (10) présente ladite portion longitudinale (18) laminée, bloquant la bride (8'), et une portion longitudinale définissant le reste de la longueur du collecteur (10), dite portion longitudinale restante (19), et dans laquelle le couvercle (10) est bloqué par la portion longitudinale restante (19) du collecteur (10).

3. Boite collectrice (3') selon la revendication 2, dans laquelle la portion longitudinale (18) du collecteur (10) bloquant la bride (8') et la portion longitudinale restante (19) du collecteur (10) présente une même inclinaison.

4. Boite collectrice (3') selon l'une quelconque des revendications 2 ou 3, dans laquelle ladite portion longitudinale (18) du collecteur (10) bloquant la bride (8') est laminée vers la bride (8').

5. Boite collectrice (3') selon l'une quelconque des revendications précédentes, dans laquelle la bride (8') présente une partie de pied (32) contre laquelle le collecteur (10) est laminé.

6. Boite collectrice (3') selon la revendication 5, dans laquelle ladite partie de pied (32) s'étend sur une distance inférieure à 40 mm suivant ladite dimension d'extension longitudinale.

7. Boite collectrice (3') selon la revendication 5 ou 6, dans laquelle ladite partie de pied (32) s'étend sur une distance égale à 20 mm suivant ladite dimension d'extension longitudinale.

8. Boite collectrice (3') selon l'une quelconque des revendications 5 à 7, dans laquelle le collecteur (10) présente des ailes latérales (13) laminées contre la partie de pied (32) de la bride (8').

9. Boite collectrice (3') selon la revendication 8, dans laquelle les ailes latérales (13) présentent un bord longitudinale libre ayant une épaisseur initiale plus faible que le reste des ailes latérales (13) du collecteur.

10. Echangeur de chaleur (1) muni d'une boite collectrice (3') selon l'une quelconque des revendications précédentes.

11. Procédé de sertissage d'une boite collectrice (3') comprenant un collecteur (10) et un couvercle (11) présentant une dimension d'extension longitudinale et au moins une bride (8'), le collecteur possédant une ductilité différente de celle de la bride, procédé dans lequel on sertit la bride (8') entre le collecteur (10) et le couvercle (11), et dans lequel on sertit le collecteur (10) sur le couvercle (11), en utilisant un même profil de poinçon (30), de sorte que la bride (8') soit bloquée entre le collecteur (10) et le couvercle (11) et que le couvercle (11) soit bloqué par le collecteur (10) en une seule opération par laminage d'une partie du collecteur (10) et/ou de la bride (8').

12. Procédé de sertissage selon la revendication 11, dans lequel la ductilité du collecteur étant supérieure à celle de la bride, on lamine le collecteur.

## Patentansprüche

1. Sammelkasten (3'), umfassend einen Kollektor (10) und einen Deckel (11), der eine Längsausdehnungsdimension aufweist, und mindestens einen Flansch (8'), der zwischen dem Kollektor (10) und dem Deckel (11) gebördelt ist, **dadurch gekennzeichnet, dass**:
- der Kollektor (10) eine unterschiedliche Duktilität zu jener des Flansches (8') aufweist;
- im Bereich des Flansches (8') ein Längsabschnitt (18) des Kollektors (10) und/oder des Flansches (8') laminiert ist, so dass der Flansch (8') zwischen dem Kollektor (10) und dem Deckel (11) festgestellt wird.

2. Sammelkasten (3') nach Anspruch 1, bei dem der Kollektor (10) den laminierten Längsabschnitt (18) aufweist, der den Flansch (8') feststellt, und einen Längsabschnitt, der den Rest der Länge des Kollektors (10) definiert, restlicher Längsabschnitt (19) genannt, und bei dem der Deckel (10) durch den restlichen Längsabschnitt (19) des Kollektors (10) festgestellt wird.

3. Sammelkasten (3') nach Anspruch 2, bei dem der Längsabschnitt (18) des Kollektors (10), der den Flansch (8') feststellt, und der restliche Längsabschnitt (19) des Kollektors (10) die selbe Neigung aufweisen.

4. Sammelkasten (3') nach einem der Ansprüche 2 oder 3, bei dem der Längsabschnitt (18) des Kollektors (10), der den Flansch (8') feststellt, zum Flansch (8') hin laminiert ist.

5. Sammelkasten (3') nach einem der vorhergehenden Ansprüche, bei dem der Flansch (8') einen Fußteil (32) aufweist, an den der Kollektor (10) laminiert ist.

6. Sammelkasten (3') nach Anspruch 5, bei dem sich der Fußteil (32) über eine Distanz unter 40 mm entlang der Längsausdehnungsdimension erstreckt.

7. Sammelkasten (3') nach Anspruch 5 oder 6, bei dem sich der Fußteil (32) über eine Distanz gleich 20 mm entlang der Längsausdehnungsdimension erstreckt.

8. Sammelkasten (3') nach einem der Ansprüche 5 bis 7, bei dem der Kollektor (10) Seitenflügel (13) umfasst, die an den Fußteil (32) des Flansches (8') laminiert sind.

9. Sammelkasten (3') nach Anspruch 8, bei dem die Seitenflügel (13) einen freien Längsrand mit einer geringeren Ausgangsdicke als der Rest der Seitenflügel (13) des Kollektors aufweisen.

10. Wärmetauscher (1), der mit einem Sammelkasten (3') nach einem der vorhergehenden Ansprüche versehen ist.

11. Verfahren zum Bördeln eines Sammelkastens (3'), umfassend einen Kollektor (10) und einen Deckel (11), der eine Längsausdehnungsdimension aufweist, und mindestens einen Flansch (8'), wobei der Kollektor eine unterschiedliche Duktilität zu jener des Flansches aufweist, wobei bei dem Verfahren der Flansch (8') zwischen dem Kollektor (10) und dem Deckel (11) gebördelt wird, und bei dem der Kollektor (10) auf dem Deckel (11) unter Verwendung des selben Stempelprofils (30) gebördelt wird, so dass der Flansch (8') zwischen dem Kollektor (10) und dem Deckel (11) festgestellt wird, und der Deckel (11) vom Kollektor (10) in einem einzigen Vorgang durch Laminieren eines Teils des Kollektors (10) und/oder des Flansches (8') festgestellt wird.

12. Bördelverfahren nach Anspruch 11, bei dem, da die Duktilität des Kollektors größer als jene des Flansches ist, der Kollektor laminiert wird.

## Claims

1. Manifold (3') comprising a collector (10) and a cover (11) with a dimension with longitudinal extension and at least one flange (8') crimped between the collector (10) and the cover (11), **characterized in that**:
- the collector (10) has ductility which differs from that of the flange (8');
- at the level of the said flange (8'), a longitudinal portion (18) of the collector (10) and/or of the flange (8') is rolled such that the flange (8') is blocked between the collector (10) and the cover (11).

2. Manifold (3') according to Claim 1, wherein the collector (10) has the said rolled longitudinal portion (18) blocking the flange (8'), and a longitudinal portion which defines the remainder of the length of the collector (10), known as the remaining longitudinal portion (19), and wherein the cover (10) is blocked by the remaining longitudinal portion (19) of the collector (10).

3. Manifold (3') according to Claim 2, wherein the longitudinal portion (18) of the collector (10) which blocks the flange (8') and the remaining longitudinal portion (19) of the collector (10) have the same inclination.

4. Manifold (3') according to either of Claims 2 and 3, wherein the said longitudinal portion (18) of the collector (10) which blocks the flange (8') is rolled towards the flange (8').

5. Manifold (3') according to any one of the preceding claims, wherein the flange (8') has a foot part (32) against which the collector (10) is rolled.

6. Manifold (3') according to Claim 5, wherein the said foot part (32) extends over a distance less than 40 mm according to the said dimension with longitudinal extension.

7. Manifold (3') according to Claim 5 or 6, wherein the said foot part (32) extends over a distance equal to 20 mm according to the said dimension with longitudinal extension.

8. Manifold (3') according to any one of Claims 5 to 7, wherein the collector (10) has lateral wings (13) which are rolled against the foot part (32) of the flange (8').

9. Manifold (3') according to Claim 8, wherein the lateral wings (13) have a free longitudinal edge with an initial thickness which is smaller than the remainder of the lateral wings (13) of the collector.

10. Heat exchanger (1) provided with a manifold (3') according to any one of the preceding claims.

11. Method for crimping a manifold (3'), comprising a collector (10) and a cover (11) with a dimension with longitudinal extension and at least one flange (8'), the collector having ductility which differs from that of the flange, in which method the flange (8') is crimped between the collector (10) and the cover (11) and in which the collector (10) is crimped onto the cover (11), using a single punch profile (30), such that the flange (8') is blocked between the collector (10) and the cover (11), and the cover (11) is blocked by the collector (10) in a single operation, by rolling part of the collector (10) and/or of the flange (8').

12. Method for crimping according to Claim 11, wherein, since the ductility of the collector is greater than that of the flange, the collector is rolled.
